# EUROPEAN PATENT APPLICATION

(11) **EP 4 528 099 A1**
(43) Date of publication of application: **26.03.2025**
(21) Application number: 23823943.8
(22) Date of filing: 14.06.2023
(51) Int. Cl.: F03D 17/00, G06Q 10/20, G06Q 30/0601, H02P 9/00

(54) **CONTROL DEVICE, MANAGEMENT SYSTEM, AND MANAGEMENT METHOD**

(30) Priority: 16.06.2022 JP 2022097399
(71) Applicant: NTN Corporation, Osaka-shi Osaka 530-0005 (JP)
(72) Inventor: SUZUKI, Katsuyoshi, Iwata-shi, Shizuoka 438-8510 (JP)
(74) Representative: Bockhorni & Brüntjen Partnerschaft Patentanwälte mbB
(86) International application number: PCT/JP2023/022045
(87) International publication number: WO 2023/243653

(57) **Abstract**

A detection unit (45) acquires detection data of a wind turbine generator (20). A controller (100) generates abnormality information indicating an abnormality or an abnormality sign in the wind turbine generator (20) based on the detection data. The controller (100) transmits the abnormality information to a user terminal (50).

## Description

### TECHNICAL FIELD

The present disclosure relates to a controller, a management system, and a management method.

### BACKGROUND ART

For example, Japanese Patent No. 5510926 (PTL 1) discloses a detection method for detecting an abnormality in a blade bearing of a wind turbine generator.

### CITATION LIST

### PATENT LITERATURE

PTL 1: Japanese Patent No. 5510926

### SUMMARY OF INVENTION

### TECHNICAL PROBLEM

The above-mentioned detection method took no consideration of a technique for allowing a user or the like of the wind turbine generator to recognize an abnormality in the wind turbine generator.

The present disclosure has been made to solve the above-described problem, and an object thereof is to provide a technique for allowing a user or the like of a wind turbine generator to recognize an abnormality in the wind turbine generator.

### SOLUTION TO PROBLEM

A management system according to the present disclosure includes a detection unit, a controller, and a terminal device. The detection unit acquires detection data of a wind turbine generator. The controller generates abnormality information indicating an abnormality or an abnormality sign in the wind turbine generator based on the detection data. The controller is configured to transmit the abnormality information to the terminal device.

A controller according to the present disclosure includes an input interface, a processor, and an output interface. The input interface receives an input of detection data of a wind turbine generator from a detection unit that acquires the detection data. The processor generates abnormality information indicating an abnormality or an abnormality sign in the wind turbine generator based on the detection data. The output interface transmits the abnormality information to a terminal device.

A management method according to the present disclosure includes: receiving an input of detection data of a wind turbine generator from a detection unit that acquires the detection data; generating abnormality information indicating an abnormality or an abnormality sign in the wind turbine generator based on the detection data; and transmitting the abnormality information to a terminal device.

### ADVANTAGEOUS EFFECTS OF INVENTION

The present disclosure allows a user or the like of a wind turbine generator to recognize an abnormality in the wind turbine generator.

### BRIEF DESCRIPTION OF DRAWINGS

Fig. 1 is a diagram for illustrating a configuration example of a management system according to the present disclosure.
Fig. 2 is a diagram for illustrating a first DB.
Fig. 3 is a diagram for illustrating a second DB.
Fig. 4 is a functional block diagram of a controller.
Fig. 5 is a diagram for illustrating an example of an abnormality image.
Fig. 6 is a diagram for illustrating an example of second checking information.
Fig. 7 is a diagram for illustrating an example of a delivery image.
Fig. 8 is a diagram for illustrating an example of a maintenance image.
Fig. 9 is a diagram for illustrating an example of a reservation image.
Fig. 10 shows an example of a flowchart illustrating a process for a controller and the like.

### DESCRIPTION OF EMBODIMENTS

Hereinafter, embodiments of the present invention will be described with reference to the accompanying drawings. In the accompanying drawings, the same or corresponding portions are denoted by the same reference characters, and the description thereof will not be repeated.

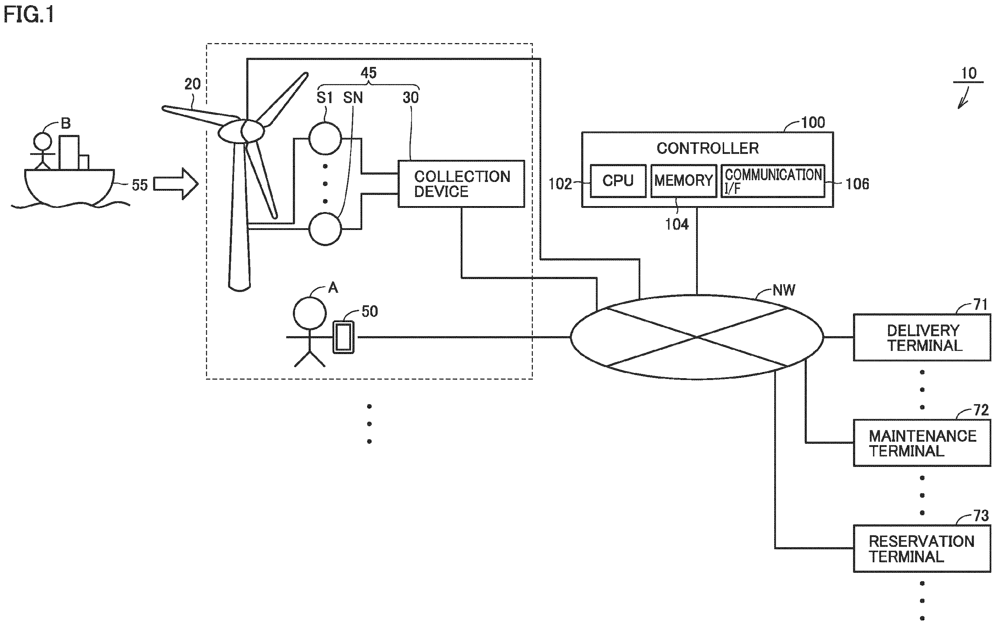

Fig. 1 is a diagram showing a configuration example of a management system 10 according to the present disclosure. Management system 10 according to the present disclosure includes at least one wind turbine generator 20, at least one detection unit 45, a controller 100, at least one user terminal 50, at least one delivery terminal 71, at least one maintenance terminal 72, at least one reservation terminal 73, and a network NW. A collection device 30, controller 100, delivery terminal 71, maintenance terminal 72, reservation terminal 73, and user terminal 50 can communicate with each other through network NW.

Wind turbine generator 20 serves to receive wind power to generate electric power. Wind turbine generator 20 includes a bearing, a power generator, and the like. Detection unit 45 is installed in association with wind turbine generator 20. Detection unit 45 monitors a component of a corresponding wind turbine generator 20 to acquire detection data of the component. The detection data is used for detecting an abnormality in wind turbine generator 20. The component is also referred to as a "detection target component".

In the example in Fig. 1, detection unit 45 is constituted of N (N is an integer equal to or larger than 1) sensors S (S1 to SN) and collection device 30. Sensor S detects a physical quantity of wind turbine generator 20. The physical quantity may be any quantity as long as an abnormality in wind turbine generator 20 can be detected. For example, sensor S may serve to detect vibrations of a bearing of wind turbine generator 20, and the physical quantity detected by sensor S is the frequency of the vibrations. Further, sensor S may serve to detect the amount of electric power generated by the power generator of wind turbine generator 20, and the physical quantity detected by sensor S is the amount of generated electric power. Collection device 30 collects the physical quantities detected by N sensors. Then, collection device 30 transmits the collected physical quantities as detection data to controller 100.

Note that the detection data may be other data instead of the data detected by each sensor. Detection unit 45 may include, for example, a camera, and the detection data may be an image captured by the camera.

Controller 100 generates abnormality information based on the detection data. In this case, the abnormality information is information indicating an abnormality or an abnormality sign in wind turbine generator 20. The information indicating an abnormality in wind turbine generator 20 indicates occurrence of an abnormality, and also a part and a component (for example, a bearing) where the abnormality occurs. Further, the information indicating an abnormality sign in wind turbine generator 20 indicates that an abnormality does not occur at present but will occur in the future. Further, the information indicating an abnormality sign may indicate a part or a component where an abnormality will occur in the future. Further, the information indicating an abnormality sign may be information based on which a user A or the like can specify the timing when an abnormality occurs.

Controller 100 includes a central processing unit (CPU) 102, a memory 104, and a communication I/F 106. Memory 104 includes, for example, a read only memory (ROM), a random access memory (RAM), and the like. Communication I/F 106 communicates with other devices (for example, collection device 30, user terminal 50, delivery terminal 71, maintenance terminal 72, reservation terminal 73, and the like). In other words, communication I/F 106 transmits and receives various signals to and from these other devices.

CPU 102 loads a program stored in the ROM onto the RAM or the like and executes the program. The program stored in the ROM describes a processing procedure for controller 100. The ROM also stores a database (DB) (described later) to be used for various calculations. Controller 100 executes various processes in accordance with these programs, the DB, and the like. The processes are not necessarily executed only by software but can also be executed by dedicated hardware (an electronic circuit). Note that the hardware configuration of each of user terminal 50, delivery terminal 71, maintenance terminal 72, and reservation terminal 73 is also the same as that of the controller.

Delivery terminal 71 is a terminal involved with delivery of a component included in wind turbine generator 20. When controller 100 detects an abnormality in wind turbine generator 20, it detects a component that has caused the abnormality. This component is an abnormal component among the components constituting wind turbine generator 20. Then, controller 100 orders a replacement component for the abnormal component. Delivery terminal 71 serves to receive the order. Specifically, controller 100 transmits order information for ordering a replacement component to delivery terminal 71. The image displayed on delivery terminal 71 shows an order image based on the order information. The image includes, for example, a replacement component to be delivered, an address for delivery, an arrival date and time, and the like. A person in charge who visually recognizes the order image delivers the replacement component indicated in the order information such that it arrives at the address at the arrival date and time. Note that the replacement component may be delivered not by the person in charge but, for example, automatically by a robot.

Delivery terminal 71 is owned by a delivery service provider that delivers the components of wind turbine generator 20. Delivery terminal 71 may be owned by a manufacturer of the components or may be owned by a service provider that provides management system 10 (controller 100).

Maintenance terminal 72 is a terminal involved with maintenance for wind turbine generator 20. When controller 100 detects an abnormality in wind turbine generator 20, a maintenance service provider needs to perform maintenance for eliminating the abnormality. Thus, controller 100 requests the maintenance service provider to perform maintenance for wind turbine generator 20. Maintenance terminal 72 serves to receive a request for maintenance. Specifically, controller 100 transmits maintenance information for requesting maintenance to maintenance terminal 72. The image displayed on maintenance terminal 72 shows a request image based on the maintenance information. The image includes, for example, an address at which maintenance is to be performed (i.e., an address of wind turbine generator 20), a maintenance date and time, and the like. A person in charge who visually recognizes the request image arranges for a maintenance person such that the maintenance person arrives at the address at the date and time displayed on the image. Note that the maintenance person may be arranged not by the person in charge but, for example, automatically by maintenance terminal 72.

Further, maintenance terminal 72 is owned by a maintenance service provider that performs maintenance for wind turbine generator 20. Maintenance terminal 72 may be owned by a service provider that provides management system 10 (controller 100).

When an abnormality occurs in wind turbine generator 20, user A or the maintenance person needs to visit the place where wind turbine generator 20 is installed. Hereinafter, user A or the maintenance person is also simply referred to as a "user A or the like". Further, there may be a case where wind turbine generator 20 is installed in a place where user A or the like cannot arrive on foot. This place is located, for example, on the ocean or on the top of a mountain. **In** this case, user A or the like is conveyed by a carrier 55 to wind turbine generator 20. For example, when wind turbine generator 20 is installed on the ocean, carrier 55 is a ship that conveys user A or the like. When wind turbine generator 20 is installed on a mountain, carrier 55 is a vehicle that conveys user A or the like. Fig. 1 shows that a maintenance person B is conveyed by a ship.

Reservation terminal 73 is involved with a reservation for carrier 55 for wind turbine generator 20. For example, a service provider of carrier 55 that deals with carrier 55 owns reservation terminal 73. When controller 100 detects an abnormality in wind turbine generator 20, it reserves carrier 55. Reservation terminal 73 serves to receive a reservation for carrier 55. Specifically, controller 100 transmits reservation information for reserving carrier 55 to reservation terminal 73. The image displayed on reservation terminal 73 shows a reservation image based on the reservation information. The image includes, for example, an address at which carrier 55 is used, date and time (maintenance date and time) at which carrier 55 is used, and the like. The person in charge who visually recognizes the reservation image arranges for carrier 55 such that carrier 55 arrives at the address at the date and time displayed in the image. Note that carrier 55 may be arranged not by the person in charge but, for example, automatically by reservation terminal 73.

User terminal 50 is a terminal device owned by user A. "User A" typically refers to a person who owns wind turbine generator 20. User terminal 50 is typically a portable terminal that can be carried by user A. The portable terminal is, for example, a smartphone, a tablet, or the like. User terminal 50 may be, for example, a stationary terminal (for example, a desktop personal computer). Further, user terminal 50 may be a dedicated computer terminal. User terminal 50 has a display device showing various images as described later.

In the present embodiment, at least one delivery service provider owns at least one delivery terminal 71. At least one maintenance service provider owns at least one maintenance terminal 72. At least one reservation service provider owns at least one reservation terminal 73. As a modification, one service provider may own at least two terminals among delivery terminal 71, maintenance terminal 72, and reservation terminal 73.

### [Database]

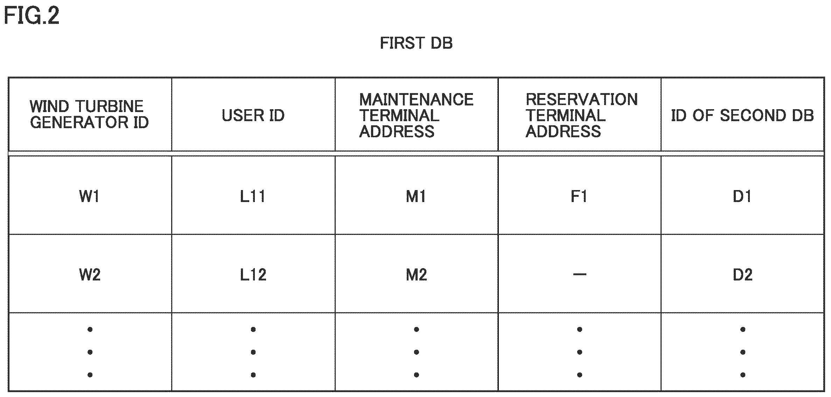

The following describes a database (DB) owned by controller 100. Fig. 2 is a diagram for illustrating a first DB. As described above, management system 10 includes at least one wind turbine generator 20. An identification (ID) (a wind turbine generator ID) for identifying wind turbine generator 20 is defined for each of at least one wind turbine generator 20. In the first DB in Fig. 2, a user ID, a maintenance terminal address, a reservation terminal address, and an ID of a second DB are associated for each wind turbine generator ID.

The user ID is an ID for identifying user A. Although not particularly shown in Fig. 2, the user ID also defines the address of user terminal 50 owned by user A indicated by this user ID.

As described above, management system 10 includes at least one maintenance terminal 72. In the first DB, the address of each of at least one maintenance terminal 72 is defined.

In this way, in the example in Fig. 2, the maintenance terminal address is associated with the wind turbine generator ID in the first DB. Thus, for example, the wind turbine generator ID can be associated with the maintenance terminal address of the maintenance service provider that is located at a position close to the place of installation of wind turbine generator 20 indicated by the wind turbine generator ID.

As described above, management system 10 includes at least one reservation terminal 73. In the first DB, the address of each of at least one reservation terminal 73 is defined.

In this way, in the example in Fig. 2, the reservation terminal address is associated with the wind turbine generator ID in the first DB. Thus, for example, the wind turbine generator ID can be associated with the reservation terminal address of the reservation service provider that reserves carrier 55 capable of conveying user A or the like to the place of installation of wind turbine generator 20 indicated by this wind turbine generator ID.

There may be a case where wind turbine generator 20 is installed in a place where carrier 55 is not required. Such a place is, for example, a flat ground. In this way, the reservation terminal address is not associated with the wind turbine generator ID of wind turbine generator 20 installed on a flat ground. In the example in Fig. 2, since the wind turbine generator having a wind turbine generator ID of W2 is installed on a flat ground, the reservation terminal address is not associated with this wind turbine generator ID of W2 (a symbol "-" is shown in Fig. 2).

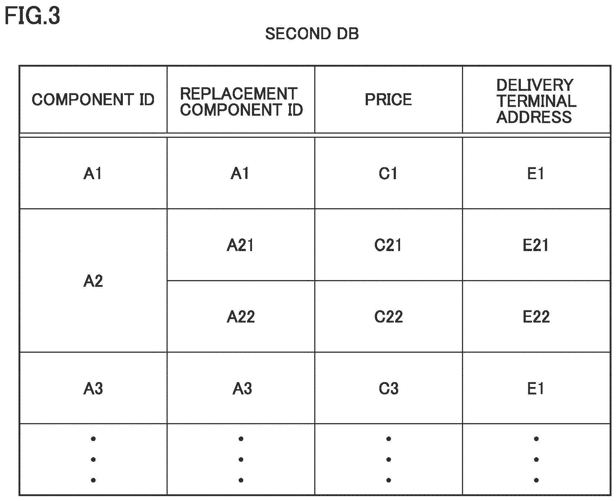

Fig. 3 is a diagram for illustrating the second DB. In the second DB in Fig. 3, a replacement component ID, a price, and a delivery terminal address are associated for each component ID.

The component ID is an ID of a component constituting wind turbine generator 20. This component is typically a detection target component. Further, the detection target component indicated by the component ID may be one type of component or two or more types of components having the same shape. Two types of detection target components having the same shape are, for example, two types of detection target components produced by different manufacturers. Further, the component ID is, for example, a model number of the component.

In the example in Fig. 3, for each of the component having a component ID of A1 and the component having a component ID of A3, there is one type of component. On the other hand, as a replacement component for the component having a component ID of A2, there are two types of components including: a component having a component ID of A21; and a component having a component ID of A22.

The price shows a value of the price of the component indicated by a component ID associated with this price. The address of the delivery terminal shows an address of the delivery terminal of the delivery service provider for the component indicated by the component ID associated with this address.

In this way, the second DB is a database defining each of the detection target components included in wind turbine generator 20. In other words, in the first DB, the ID in the second DB is associated with the wind turbine generator ID. In this case, the second DB associated with the wind turbine generator ID defines each of the detection target components included in wind turbine generator 20 indicated by the wind turbine generator ID.

### [Functional Block Diagram of Controller]

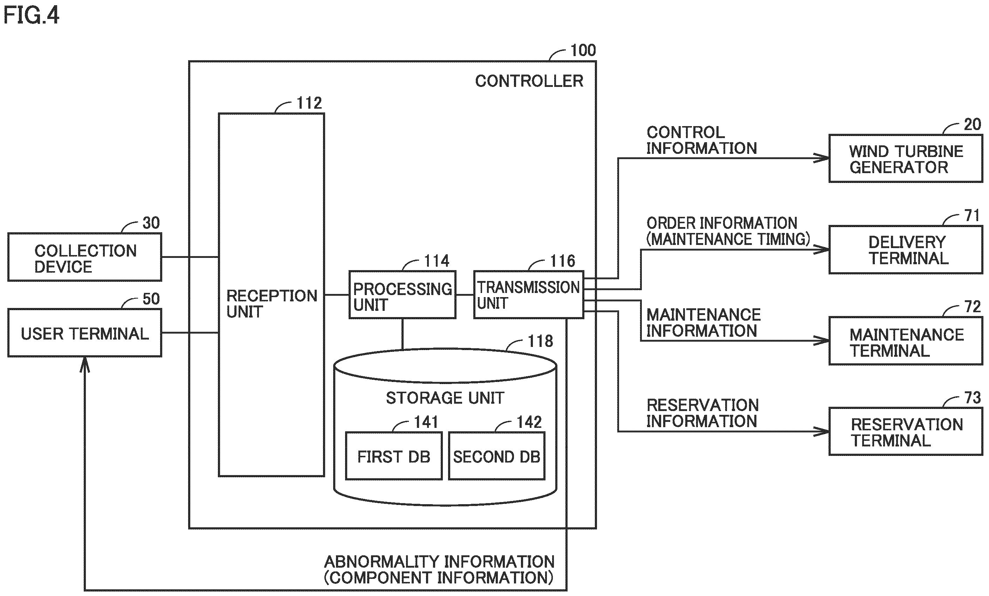

Fig. 4 is a functional block diagram of controller 100. Controller 100 includes a reception unit 112, a processing unit 114, a transmission unit 116, and a storage unit 118. Storage unit 118 stores a first DB 141 and a second DB 142.

Reception unit 112 receives detection data from collection device 30 and input information input by user A from user terminal 50. For example, for each prescribed time period (for example, one hour), each collection device 30 outputs the detection data and the wind turbine generator ID of wind turbine generator 20 associated with the corresponding collection device 30 to controller 100. Reception unit 112 receives the detection data and the wind turbine generator ID. Further, when user terminal 50 receives an input from a user, it outputs input information corresponding to this input to controller 100.

Reception unit 112 outputs the received information to processing unit 114. Processing unit 114 executes a process corresponding to the information. Processing unit 114 generates abnormality information based on the detection data. As described above, the abnormality information indicates an abnormality or an abnormality sign in the wind turbine generator.

The following describes, for example, a case where the detection data includes the frequency of the vibrations of the bearing in wind turbine generator 20. In this case, when the frequency is within a normal range, processing unit 114 determines that the bearing of wind turbine generator 20 associated with collection device 30 having output the frequency normally operates. When the frequency is within an abnormal range, processing unit 114 determines that an abnormality occurs in the bearing of wind turbine generator 20 associated with collection device 30 having output the frequency. Further, when processing unit 114 determines that an abnormality occurs in the bearing of wind turbine generator 20, it identifies the component having the abnormality. For example, when the frequency shows an abnormal value, the bearing that is a detection target component is determined as an abnormal component having the abnormality. The information indicating the abnormal component is also referred to as "component information".

Further, when processing unit 114 determines that an abnormality occurs in wind turbine generator 20, it specifies a maintenance timing for eliminating the abnormality. Processing unit 114 specifies the maintenance timing based on the component information and prescribed information. The component information includes a first timing when a replacement component for the abnormal component indicated by the component information can be arranged. Further, the prescribed information includes, for example, at least one of a maintenance schedule, a second timing when carrier 55 can be used, and a third timing when a maintenance person can be dispatched.

The maintenance schedule is set, for example, by user A or the like. In general, a higher temperature in the summer season leads to an increased burden on the maintenance person. Thus, the maintenance schedule is set to be a time period other than summer by user A or the like.

When processing unit 114 specifies an abnormal component and determines that the abnormal component needs to be replaced, a component to be replaced with the abnormal component becomes necessary. Thus, processing unit 114 specifies the ID of the second DB based on the first DB and the wind turbine generator ID that has been transmitted together with the detection data. Then, processing unit 114 refers to the second DB indicated by the ID of the second DB to specify the delivery terminal address associated with the abnormal component. Further, processing unit 114 transmits a first inquiry signal to the delivery terminal address. The first inquiry signal is for inquiring about the first timing (a timing for delivery of a replacement component for the abnormal component). Upon receipt of the first inquiry signal, delivery terminal 71 specifies the first timing. For example, when the delivery service provider possesses a replacement component, the replacement component can be immediately shipped. On the other hand, when the delivery service provider does not possess the replacement component, the delivery service provider needs to arrange for the replacement component and thus requires some time to ship the replacement component. After specifying the first timing, delivery terminal 71 transmits the first timing to controller 100.

Further, processing unit 114 determines whether or not carrier 55 is necessary for maintenance of the wind turbine generator indicated by the wind turbine generator ID. For example, if the reservation terminal address is associated with the wind turbine generator ID, it is determined that carrier 55 is necessary. On the other hand, if the reservation terminal address is not associated with the wind turbine generator ID, it is determined that carrier 55 is unnecessary.

If processing unit 114 determines that carrier 55 is necessary, it refers to the first DB to specify the reservation terminal address associated with the wind turbine generator ID that has been transmitted together with the detection data. Further, processing unit 114 transmits a second inquiry signal to the reservation terminal address. The second inquiry signal is for inquiring about the second timing (the timing when carrier 55 is available). For example, the service provider of carrier 55 that owns a reservation terminal checks the status of use of carrier 55 to specify the second timing. Upon receipt of the second inquiry signal, reservation terminal 73 transmits the second timing to controller 100.

Further, processing unit 114 determines whether or not a maintenance person is necessary for the maintenance of the wind turbine generator indicated by the wind turbine generator ID. For example, when the abnormality detected by processing unit 114 is a minor abnormality, processing unit 114 determines that the maintenance person is not necessary and user A can perform maintenance. On the other hand, when the abnormality detected by processing unit 114 is a severe abnormality, processing unit 114 determines that the maintenance person is necessary. In the following description, the abnormality not requiring a maintenance person (a minor abnormality) is also referred to as a "first abnormality". Further, the abnormality requiring a maintenance person (a severe abnormality) is also referred to as a "second abnormality".

When processing unit 114 determines that the maintenance person is necessary, it refers to the first DB to specify the maintenance terminal address associated with the wind turbine generator ID that has been transmitted together with the detection data. Further, processing unit 114 transmits a third inquiry signal to the maintenance terminal address. The third inquiry signal is for inquiring about the third timing (the timing when the maintenance person can be dispatched). For example, the maintenance service provider that owns the maintenance terminal checks the status of dispatch of the maintenance person to thereby specify the third timing. Upon receipt of the third inquiry signal, maintenance terminal 72 transmits the third timing to controller 100.

Processing unit 114 specifies the maintenance timing based on the first to third timings. For example, processing unit 114 specifies the timing of overlap among the first to third timings as the maintenance timing.

Further, when the abnormality in wind turbine generator 20 is the first abnormality, user terminal 50 having the user ID associated with the wind turbine generator ID is caused to display the information stating, "since the abnormality is a minor abnormality, user A can perform maintenance". In this case, processing unit 114 specifies the maintenance timing based on the first and second timings without specifying the third timing. For example, processing unit 114 specifies the timing of overlap between the first and second timings as the maintenance timing.

When processing unit 114 specifies the maintenance timing for the abnormal component, it performs a suppression process for suppressing the driving of wind turbine generator 20 including the abnormal component such that this wind turbine generator 20 can be driven until the maintenance timing. The suppression process is performed, for example, for reducing the rotation torque by changing the directions of the blades of wind turbine generator 20. In the example in Fig. 4, transmission unit 116 transmits the control information to wind turbine generator 20 including an abnormal component, to thereby cause wind turbine generator 20 to directly perform the suppression process.

As a modification, the suppression process may be a process in which transmission unit 116 transmits the suppression information indicating the suppression process to user terminal 50. Upon receipt of the suppression information, user terminal 50 displays a suppression image based on the suppression information. As the suppression image, for example, user terminal 50 causes a display region to show an image of words stating, "Perform suppression process until the maintenance timing, i.e., until A (month), B (date), C (time) in 2022". User A who visually recognizes this image of words causes wind turbine generator 20 to perform the suppression process. In this way, controller 100 may cause wind turbine generator 20 to indirectly perform the suppression process.

When processing unit 114 specifies the abnormal component, it transmits order information for ordering a component for the abnormal component from transmission unit 116 to delivery terminal 71. When processing unit 114 determines that carrier 55 is necessary, it transmits reservation information for reserving carrier 55 to reservation terminal 73. When processing unit 114 specifies the abnormal component, it transmits the abnormality information including the component information indicating the abnormal component to user terminal 50.

### [Display Screen]

The following describes a display screen displayed on each terminal. Upon receipt of the abnormality information, user terminal 50 gives a notification about the abnormality information. In this case, "giving a notification" is a process for causing user A to recognize information. Also, "giving a notification" includes a process of displaying the information and a process of outputting sound indicating the information. The present embodiment describes a configuration in which "giving a notification" is a process of displaying the information.

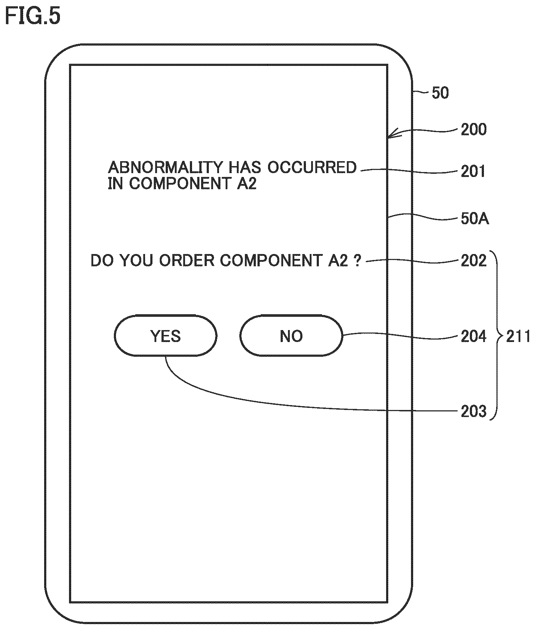

Upon receipt of the abnormality information, user terminal 50 displays an image based on the abnormality information (the image will be hereinafter also referred to as an "abnormality image"). Fig. 5 is a diagram for illustrating an example of the abnormality image. An abnormality image 200 includes images 201 and 211. Fig. 5 shows an example in which abnormality image 200 is displayed in a display region 50A on the display device of user terminal 50.

Image 201 shows component information (an image showing an abnormal component). In other words, image 201 is for causing user A to recognize an abnormal component. In the example in Fig. 5, image 201 is an image of words stating, "abnormality has occurred in component A2". By displaying this image of words, user A can recognize that an abnormality has occurred in a component A2.

Image 211 shows first checking information. The first checking information is for checking with user A of user terminal 50 whether or not to transmit the order information to delivery terminal 71. Image 211 includes an image of words 202 stating, "do you order component A2 ?", a YES button 203, and a NO button 204.

For example, when user A desires to order component A2, user A operates YES button 203. When user A does not desire to order component A2, for example, when user A owns component A2, user A operates NO button 204.

In the case where there is one replacement component for the abnormal component in the display device, the order information is transmitted to the delivery terminal when user A provides an input to transmit the order information to delivery terminal 71 in accordance with the first checking information (image 211) (i.e., when YES button 203 is operated).

Further, as described with reference to Fig. 3, in the present embodiment, the replacement component for component A2 includes a first component A21 and a second component A22. Thus, in the present embodiment, when there are a plurality of replacement components for an abnormal component, controller 100 checks with user A which one of the plurality of replacement components is to be ordered.

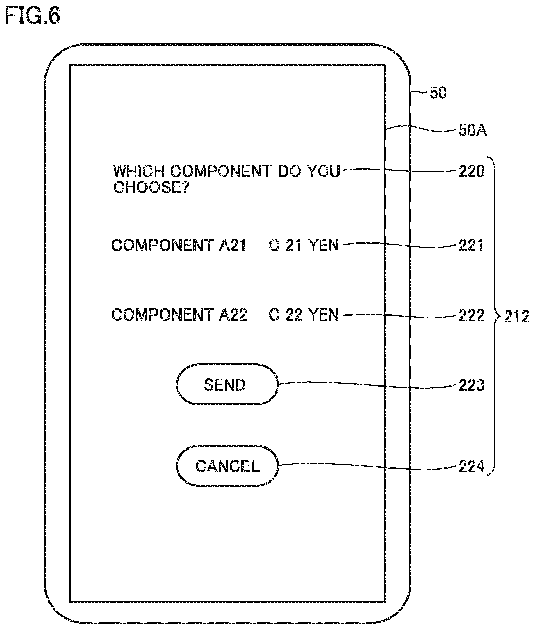

Fig. 6 is an example of an image showing second checking information 212. Second checking information 212 is for checking which one of first component A21 and second component A22 is to be ordered. Second checking information 212 includes an image 220, an image 221, an image 222, a send button 223, and a cancel button 224.

Image 220 is an image of words stating, "which component do you choose ?". Image 221 includes words indicating component A21 and words indicating the price (C 21 yen) of component A21. Further, image 222 includes words indicating component A22 and words indicating the price (C 22 yen) of component A22. Further, the price C21 yen and the price C22 yen are prices defined in the second DB.

For example, when user A desires to order component A21, user A designates component A21 and thereafter operates send button 223. When user A desires to order component A22, user A designates component A22 and thereafter operates send button 223. When user A does not desire to order each of components A21 and A22, for example, when user A owns component A21 or A22, then, user A operates cancel button 224.

Although not particularly shown, in the case of a component (for example, component A1) for which there is one type of replacement component, the checking screen in Fig. 5 shows image 211 of the first checking information as well as an image indicating the price of component A1.

Further, controller 100 may cause user terminal 50 to display an image for checking whether or not to request the maintenance for wind turbine generator 20. Further, controller 100 may cause user terminal 50 to display an image for checking whether or not to reserve carrier 55.

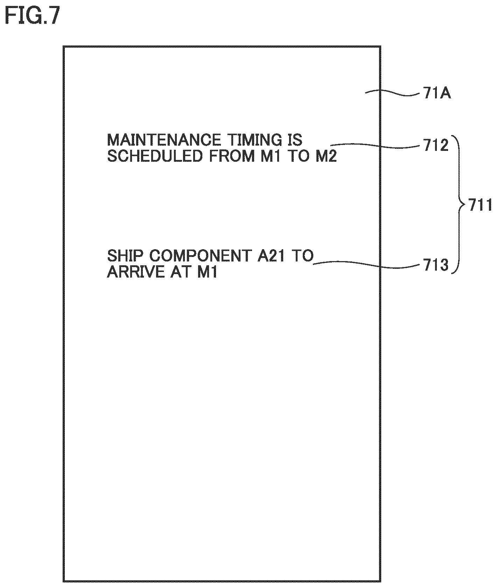

Fig. 7 shows an example of a delivery image 711 displayed on delivery terminal 71. Delivery image 711 is an image based on the delivery information transmitted from controller 100. Delivery image 711 is displayed in a display region 71A on the display device of delivery terminal 71.

In the example in Fig. 7, delivery image 711 includes images 712 and 713. Image 712 shows a maintenance timing. Image 712 in the example in Fig. 7 shows an image of words stating, "maintenance timing is scheduled from M1 to M2". Image 713 shows a component to be shipped. Image 713 in the example in Fig. 7 is an image of words stating, "ship component A21 so as to arrive at M1".

The person in charge of the delivery service provider that owns delivery terminal 71 visually checks delivery image 711 and thereby can recognize the component to be shipped and the timing of delivery.

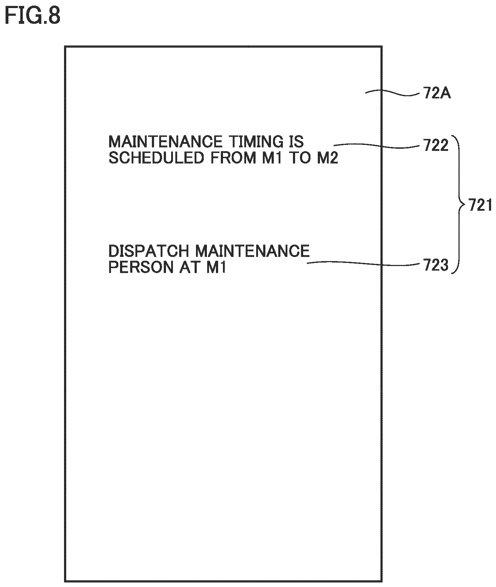

Fig. 8 shows an example of a maintenance image 721 displayed on maintenance terminal 72. Maintenance image 721 is an image based on the maintenance information transmitted from controller 100. Maintenance image 721 is displayed in a display region 72A on the display device of maintenance terminal 72.

In the example in Fig. 8, maintenance image 721 includes images 722 and 723. Image 722 shows a maintenance timing. Image 722 in the example in Fig. 8 is an image of words stating, "maintenance timing is scheduled from M1 to M2". Image 723 shows that a maintenance person is dispatched at the maintenance timing. Image 723 in the example in Fig. 8 is an image of words stating, "dispatch maintenance person at M1".

The person in charge of the maintenance service provider that owns maintenance terminal 72 visually checks maintenance image 721 and thereby can recognize the timing to dispatch the maintenance person.

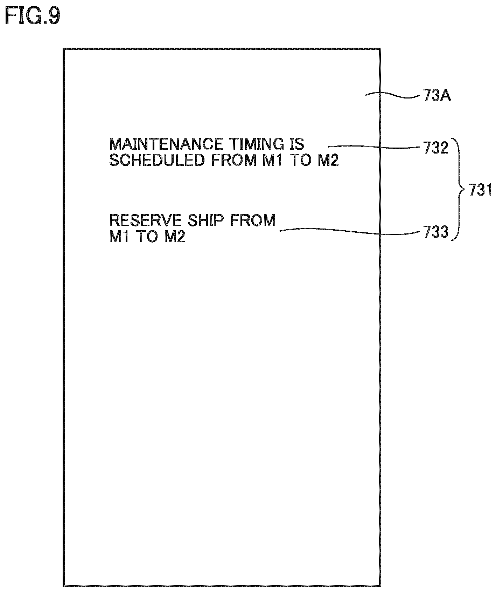

Fig. 9 shows an example of a reservation image 731 displayed on reservation terminal 73. Reservation image 731 is an image based on the reservation information transmitted from controller 100. Reservation image 731 is displayed in a display region 73A on the display device of reservation terminal 73.

In the example in Fig. 9, reservation image 731 includes images 732 and 733. Image 732 shows a maintenance timing. Image 732 in the example in Fig. 9 is an image of words stating, "maintenance timing is scheduled from M1 to M2". Image 733 shows that a ship is used at the maintenance timing. Image 733 in the example in Fig. 9 is an image of words stating, "reserve ship from M1 to M2".

The person in charge of the reservation service provider that owns reservation terminal 73 visually checks reservation image 731 and thereby can confirm the timing to use the ship.

### [Flowchart]

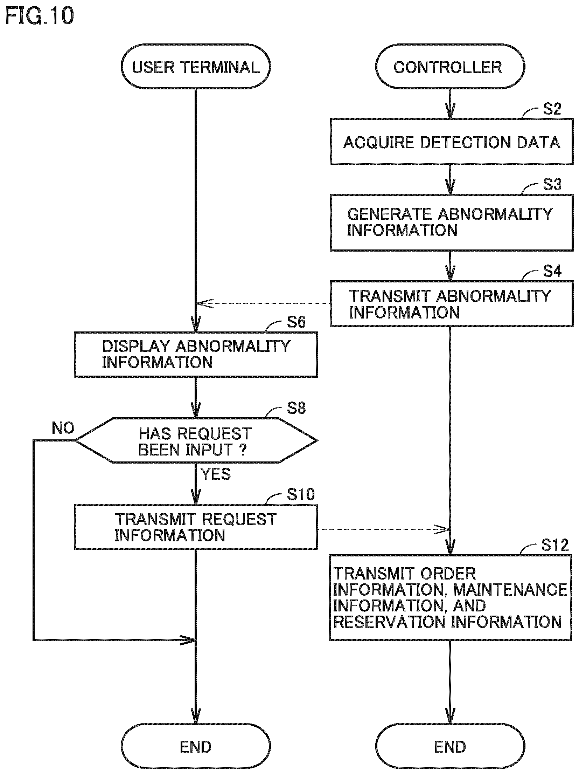

Fig. 10 is an example of a flowchart illustrating a process of user terminal 50 and a process of controller 100. The flowchart in Fig. 10 is started every time the above-mentioned prescribed time period (for example, one hour) elapses.

First, in step S2, controller 100 acquires detection data from detection unit 45. Then, in step S3, controller 100 generates abnormality information based on the detection data. Then, in step S4, controller 100 transmits the abnormality information to user terminal 50.

In step S6, user terminal 50 displays the abnormality information (see Figs. 5 and 6). Then, in step S8, user terminal 50 determines whether or not user A has input a maintenance request to user terminal 50. In step S8, it is determined as YES when YES button 203 in Fig. 5 is operated or when send button 223 in Fig. 6 is operated. On the other hand, it is determined as NO in step S8 when NO button 204 in Fig. 5 is operated or when cancel button 224 in Fig. 6 is operated.

When it is determined as NO in step S8, the process ends. When it is determined as YES in step S8, the process proceeds to step S10. In step S10, user terminal 50 transmits the request information to controller 100. When the detected abnormality is the second abnormality, the request information is for requesting the maintenance service provider to perform maintenance, requesting delivery terminal 71 to order a replacement component for the abnormal component, and requesting reservation terminal 73 to reserve carrier 55. When the detected abnormality is the first abnormality, the request information is for requesting delivery terminal 71 to order a replacement component for the abnormal component and requesting reservation terminal 73 to reserve carrier 55.

Upon receipt of the request information, in step S12, controller 100 transmits the order information to delivery terminal 71. In step S12, controller 100 transmits the maintenance information to maintenance terminal 72. In step S12, controller 100 transmits the reservation information to reservation terminal 73 as required. The process in step S12 in Fig. 10 is performed when the detected abnormality is the second abnormality.

Delivery terminal 71 displays an image (see Fig. 7) related to the order information. Further, maintenance terminal 72 displays an image (see Fig. 8) related to the maintenance information. Further, reservation terminal 73 displays an image (see Fig. 9) related to the reservation information.

### [Functions and Effects]

As shown in Fig. 4, controller 100 generates abnormality information indicating an abnormality or an abnormality sign in wind turbine generator 20 based on the detection data. Then, controller 100 transmits the abnormality information to user terminal 50. Then, user terminal 50 gives a notification about the abnormality information (see image 201 in Fig. 5). According to such a configuration, management system 10 can cause the owner (user A) of user terminal 50 to recognize the abnormality information about wind turbine generator 20.

Further, controller 100 specifies an abnormal component of wind turbine generator 20, and the abnormality information includes component information indicating the abnormal component (see image 201 in Fig. 5). According to such a configuration, management system 10 can cause the owner of user terminal 50 to recognize a component having an abnormality in wind turbine generator 20.

Management system 10 further includes delivery terminal 71 involved with delivery of a component included in wind turbine generator 20. As shown in Fig. 4, controller 100 transmits the order information for ordering a replacement component for an abnormal component to delivery terminal 71. According to such a configuration, controller 100 can automatically arrange for a replacement component for an abnormal component. Therefore, the burden on user A can be reduced.

Further, as shown in Fig. 4, controller 100 specifies the maintenance timing for wind turbine generator 20, and the order information includes the maintenance timing. According to such a configuration, since the replacement component can be requested so as to arrive at the maintenance timing, for example, the amount of inventory of the replacement components held by user A can be reduced.

As shown in Fig. 4, controller 100 specifies the first timing and specifies the maintenance timing based on the first timing. In other words, controller 100 specifies the maintenance timing based on the component information. According to such a configuration, the maintenance timing can be automatically determined.

As shown in Fig. 4, controller 100 performs a process for suppressing the driving of wind turbine generator 20 such that wind turbine generator 20 can be driven until the maintenance timing. According to such a configuration, since wind turbine generator 20 can be driven until the maintenance timing, a reduction in amount of power generation can be suppressed as compared with the case where the power generation process of wind turbine generator 20 is stopped.

As shown in Fig. 5, controller 100 causes user terminal 50 to give a notification about the first checking information for checking with user A of user terminal 50 whether or not to transmit the order information to the delivery terminal (see image 211 in Fig. 5). According to such a configuration, since user A can determine whether or not to transmit the order information to delivery terminal 71, the convenience for user A can be improved.

Upon receipt of an input from user A to transmit the order information to delivery terminal 71 in accordance with the first checking information, user terminal 50 transmits the order information to delivery terminal 71 (see steps S8 and S10 in Fig. 10). According to such a configuration, the order information is transmitted to the delivery terminal at the time when user A provides an input to transmit the order information to the delivery terminal, with the result that a component can be ordered while reflecting the intention of user A.

As shown in Fig. 3, the first and second components are defined as candidates for replacement components in the second DB, and controller 100 causes user terminal 50 to give a notification about the second checking information for checking which one of the first and second components is to be ordered (see Fig. 6). According to such a configuration, since user A can determine which one of the first and second components is to be ordered, the convenience for user A can be improved.

Upon receipt of an input from user A about the component to be ordered in accordance with the second checking information, user terminal 50 transmits order information for ordering the component to delivery terminal 71 (see Fig. 6). According to such a configuration, even when there are the first and second components as candidates for the replacement component to be delivered, user A can select a replacement component, so that the convenience for user A can be improved.

The second checking information includes the prices of the first and second components (see Fig. 6). According to such a configuration, user A can select a replacement component in consideration of the prices of the first and second components, so that the convenience for user A can be improved.

Further, as shown in Fig. 1, management system 10 further includes reservation terminal 73 involved with the reservation for carrier 55 that carries the maintenance person who performs maintenance for wind turbine generator 20. As shown in Fig. 4, controller 100 transmits the reservation information for reserving carrier 55 to reservation terminal 73. According to such a configuration, carrier 55 can be automatically reserved.

As shown in Fig. 1, management system 10 further includes maintenance terminal 72 associated with the maintenance person of wind turbine generator 20. As shown in Fig. 4, controller 100 transmits the maintenance information for reserving the maintenance person to maintenance terminal 72. According to such a configuration, the maintenance person can be automatically arranged.

### [Modifications]

In the configuration described in the above embodiment, user terminal 50 is owned by user A of wind turbine generator 20. However, user terminal 50 may be owned by a person different from user A. For example, user terminal 50 may be owned by a person in charge of the maintenance service provider. According to such a configuration, the person in charge of the maintenance service provider can recognize the abnormality information.

### [Additional Aspects]

(Clause 1) A management system according to the present disclosure includes a detection unit, a controller, and a terminal device. The detection unit acquires detection data of a wind turbine generator. The controller generates abnormality information indicating an abnormality or an abnormality sign in the wind turbine generator based on the detection data. The controller is configured to transmit the abnormality information to the terminal device.

(Clause 2) In the management system according to Clause 1, the controller is configured to specify an abnormal component in the wind turbine generator. The abnormality information includes component information indicating the abnormal component.

(Clause 3) In the management system according to Clause 2, the management system further includes a delivery terminal involved with delivery of a component to be used in the wind turbine generator. The controller is configured to transmit order information for ordering a replacement component for the abnormal component to the delivery terminal.

(Clause 4) In the management system according to Clause 3, the controller is configured to specify a maintenance timing for the wind turbine generator. The order information includes the maintenance timing.

(Clause 5) In the management system according to Clause 4, the controller is configured to specify the maintenance timing based on the component information.

(Clause 6) In the management system according to Clause 4 or 5, the controller is configured to perform a process for suppressing driving of the wind turbine generator to allow the wind turbine generator to be driven until the maintenance timing.

(Clause 7) In the management system according to any one of Clauses 3 to 6, the controller is configured to cause the terminal device to give a notification about first checking information for checking with a user of the terminal device whether or not to transmit the order information to the delivery terminal.

(Clause 8) In the management system according to Clause 7, upon receipt of an input from the user to transmit the order information to the delivery terminal in accordance with the first checking information, the terminal device is configured to transmit the order information to the delivery terminal.

(Clause 9) In the management system according to any one of Clauses 3 to 8, regarding corresponding information, each of a first component and a second component is defined as a candidate for the replacement component. The controller is configured to cause the terminal device to give a notification about second checking information for checking which one of the first component and the second component is to be ordered.

(Clause 10) In the management system according to Clause 9, upon receipt of an input from a user about a component to be ordered in accordance with the second checking information, the terminal device is configured to transmit the order information for ordering the component to the delivery terminal.

(Clause 11) In the management system according to Clause 9 or 10, the second checking information includes a price of the first component and a price of the second component.

(Clause 12) In the management system according to any one of Clauses 1 to 11, the management system further includes a reservation terminal involved with a reservation for a carrier that carries a maintenance person who performs maintenance for the wind turbine generator. The controller is configured to transmit reservation information for reserving the carrier to the reservation terminal.

(Clause 13) In the management system according to any one of Clause 1 to 12, the management system further includes a maintenance terminal associated with a maintenance person of the wind turbine generator. The controller is configured to transmit maintenance information required for reserving the maintenance person to the maintenance terminal.

(Clause 14) A controller according to the present disclosure includes an input interface, a processor, and an output interface. The input interface receives an input of detection data of a wind turbine generator from a detection unit that acquires the detection data. The processor generates abnormality information indicating an abnormality or an abnormality sign in the wind turbine generator based on the detection data. The output interface transmits the abnormality information to a terminal device.

(Clause 15) A management method according to the present disclosure includes: receiving an input of detection data of a wind turbine generator from a detection unit that acquires the detection data; generating abnormality information indicating an abnormality or an abnormality sign in the wind turbine generator based on the detection data; and transmitting the abnormality information to a terminal device.

It should be understood that the embodiments disclosed herein are illustrative and non-restrictive in every respect. The scope of the present invention is defined by the terms of the claims, rather than the above description of the embodiments, and is intended to include any modifications within the meaning and scope equivalent to the terms of the claims.

### REFERENCE SIGNS LIST

10 management system, 20 wind turbine generator, 30 collection device, 45 detection unit, 50 user terminal, 55 carrier, 71 delivery terminal, 72 maintenance terminal, 73 reservation terminal, 104 memory, 112 reception unit, 114 processing unit, 116 transmission unit, 118 storage unit, 200 abnormality image, 202 image of words, 711 delivery image, 721 maintenance image, 731 reservation image.

## Claims

1. A management system comprising:
a detection unit that acquires detection data of a wind turbine generator;
a controller that generates abnormality information indicating an abnormality or an abnormality sign in the wind turbine generator based on the detection data; and
a terminal device, wherein
the controller is configured to transmit the abnormality information to the terminal device.

2. The management system according to claim 1, wherein
the controller is configured to specify an abnormal component in the wind turbine generator, and
the abnormality information includes component information indicating the abnormal component.

3. The management system according to claim 2, further comprising a delivery terminal involved with delivery of a component to be used in the wind turbine generator, wherein
the controller is configured to transmit order information for ordering a replacement component for the abnormal component to the delivery terminal.

4. The management system according to claim 3, wherein
the controller is configured to specify a maintenance timing for the wind turbine generator, and
the order information includes the maintenance timing.

5. The management system according to claim 4, wherein the controller is configured to specify the maintenance timing based on the component information.

6. The management system according to claim 4 or 5, wherein the controller is configured to perform a process for suppressing driving of the wind turbine generator to allow the wind turbine generator to be driven until the maintenance timing.

7. The management system according to any one of claims 3 to 5, wherein the controller is configured to cause the terminal device to give a notification about first checking information for checking with a user of the terminal device whether or not to transmit the order information to the delivery terminal.

8. The management system according to claim 7, wherein, upon receipt of an input from the user to transmit the order information to the delivery terminal in accordance with the first checking information, the terminal device is configured to transmit the order information to the delivery terminal.

9. The management system according to any one of claims 3 to 5, wherein
each of a first component and a second component is defined as the replacement component, and
the controller is configured to cause the terminal device to give a notification about second checking information for checking which one of the first component and the second component is to be ordered.

10. The management system according to claim 9, wherein, upon receipt of an input from a user about a component to be ordered in accordance with the second checking information, the terminal device is configured to transmit the order information for ordering the component to the delivery terminal.

11. The management system according to claim 9, wherein the second checking information includes a price of the first component and a price of the second component.

12. The management system according to any one of claims 1 to 5, further comprising a reservation terminal involved with a reservation for a carrier that carries a maintenance person who performs maintenance for the wind turbine generator, wherein
the controller is configured to transmit reservation information for reserving the carrier to the reservation terminal.

13. The management system according to any one of claims 1 to 5, further comprising a maintenance terminal associated with a maintenance person of the wind turbine generator, wherein
the controller is configured to transmit maintenance information required for reserving the maintenance person to the maintenance terminal.

14. A controller comprising:
an input interface that receives an input of detection data of a wind turbine generator from a detection unit that acquires the detection data;
a processor that generates abnormality information indicating an abnormality or an abnormality sign in the wind turbine generator based on the detection data; and
an output interface that transmits the abnormality information to a terminal device.

15. A management method comprising:
receiving an input of detection data of a wind turbine generator from a detection unit that acquires the detection data;
generating abnormality information indicating an abnormality or an abnormality sign in the wind turbine generator based on the detection data; and
transmitting the abnormality information to a terminal device.
